# EUROPEAN PATENT SPECIFICATION

(11) **EP 0 546 362 B1**
(45) Date of publication and mention of the grant of the patent: **22.01.1997**
(21) Application number: 92119809.9
(22) Date of filing: 20.11.1992
(51) Int. Cl.: G01B 11/06, G01B 21/08

(54) **Scanning method and equipment with independent scanning heads for the measurement and display of the thickness of a film**
Abtastverfahren und Vorrichtung mit unabhängigen Abtastköpfen zur Messung und Anzeige der Dicke eines Films
Procédé de balayage et équipement avec des têtes de balayage pour mesurer et afficher l'épaisseur d'un film

(30) Priority: 09.12.1991 IT MI913296
(43) Date of publication of application: 16.06.1993
(73) Proprietor: ELECTRONIC SYSTEMS S.P.A., I-28015 Momo (No) (IT)
(72) Inventor: Masotti, Alessandro, I-28040 Lesa (NO) (IT)
(74) Representative: La Ciura, Salvatore

(56) References cited:
- WO-A-90/01673
- PATENT ABSTRACTS OF JAPAN vol. 12, no. 271 (P-736)28 July 1988 & JP-A-63 053 406 (MITSUBISHI ELECTRIC CORPORATION) 7 March 1988.
- PATENT ABSTRACTS OF JAPAN vol. 10, no. 26 (P-425)31 January 1986 & JP-A-60 177 202 (TOSHIBA KIKAI KK) 11 September 1985.

## Description

This invention proposes a method and the corresponding equipment for the measurement by scanning, by means of a pair of independent scanning heads, of the thickness of a film as it advances.

The thickness is monitored simultaneously in the longitudinal direction (longitudinal being understood as the direction parallel to the direction of advance of the film) and in the transversal direction.

The indication of the measurements obtained is displayed on a monitor in the form of a pair of profiles in such a way as to provide an accurate representation of the curve of the thickness of the film in a transversal direction and, simultaneously, a representation of the variations of the thickness in the longitudinal direction.

The profiles, as will be described later herein, may be superimposed or not, as required.

This system permits the operation to have a rapid and clear picture of the variations of the thickness of the material, both transversally and longitudinally.

There are numerous sectors of industry in which there is a need to have a visual display of the thickness of a thin material, such as, for example, a sheet of paper, a rubber or plastic film, a metal sheet etc., distinguishing between the transversal and longitudinal variations.

Equipments for the production of these films are already available on the technical market and well-known to experts in the sector and, therefore, a detailed description is superfluous.

All these equipments offer the possibility of intervening by means of various adjustments to modify the thickness of the material as it is being produced, which must be monitored with the maximum possible precision.

JP-A-63053406 shows an apparatus for the measurement of the thickness of a film as it advances, comprising two detection heads, each provided with an optical system. A first head is fixed, and measures a reference surface, while the other moves along a guide and is stopped at a desired position to scan the surface of the film.

The value measured by the first head is compared with a reference value and the difference is used as correction data for the value measured by the second head.

JP-A-60177202 relates to an apparatus for measuring the thickness of an object, comprising a scanning head which moves along a guide in the transversal direction of the object.

Means are provided for decreasing the speed of the scanning head near the ends of the object, and for increasing the time constant of response characteristic.

European patent applications no. 0 452 665 and 0 452 666 of the same applicant, describes a method and a cross scanning equipment for measuring the thickness of a material in a film, in which a pair of thickness gauges move simultanously in opposite directions along a line at right angles to that of the direction of advance of the film, in order to simultaneously effect two measurements in correspondence to two points symmetrically located with respect to the longitudinal axis of the film itself, in order to check the variations of thickness in the transversal direction, independently of the variations in thickness in the longitudinal direction.

With this system, instantaneously measuring the thickness of both sides of the film, it is possible to rapidly adjust the production equipment and the eventual adjustments are not influenced by eventual variations in the longitudinal thickness.

There are, however, cases in which, in addition to knowing the curve of the thickness of the material in a transversal direction, it is also useful or necessary to know the curve of the same in a longitudinal direction, something which is not possible in a quick and rapid way with the known equipment.

This requirement finds a solution with the method and corresponding equipment, according to the present invention, a method which provides for the measurement of the thickness of the material by a detector which moves in a direction at right angles to the direction of advance of the film and a simultaneous detection of the thickness in the longitudinal direction by means of a second measuring instrument maintained in a fixed position and/or which is moved at programmed intervals.

An embodiment of this invention will now be described in detail, purely as a non-limiting example, with particular reference to the attached drawings in which:
- figure 1 is a schematic illustration of the front view of a scanner equipment according to the invention
- figure 2 is a schematic illustration, viewed from above, of a strip of material indicating the tracks along which the sensors effect the measurements. The details which appear in the boxes of the figure show the profiles which indicate the curves of the thickness of the materials as they are detected by the two sensors (figs. 2a and 2b) and the real profile (fig. 2c).

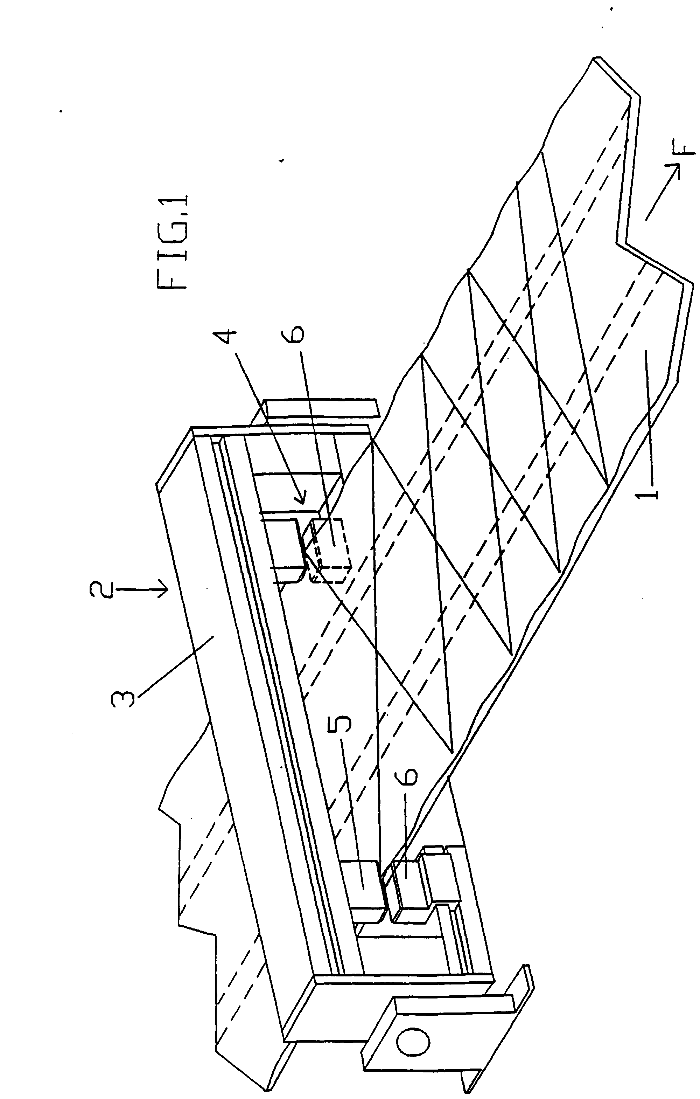

With reference to fig. 1, 1 indicates the film which advances in the direction of the arrow F.

The film 1 passes through a scanning machine indicated in its entirety by 2, which comprises a frame 3 on which a pair of scanning heads run indicated in its entirety as 4, each of which consisting of a emitter of signals (e.g. radiations, infra-red rays etc) 5 located on one side of the film and a corresponding detector or measurer 6, located on the opposite side.

In particular, the method according to the invention lays down that one of the two emitter-detector units moves in reciprocating motion over the whole length of the strip 1 in a direction at right angles to the direction of advance of the strip, while the other is maintained fixed in a preset position along the frame to effect a longitudinal measurement of the thickness.

Naturally, the position of this second emitter-detector unit can be varied in order to effect several series of consecutive measurements at different heights of the strip.

It sometimes happens that the variations in the thickness of the material in the longitudinal direction occur at periodical intervals, for example when they are caused by eccentricity of the calenders or similar components, and it could be useful to carry out the monitoring for a certain section and then move the scanning head to repeat the measurement in a different position.

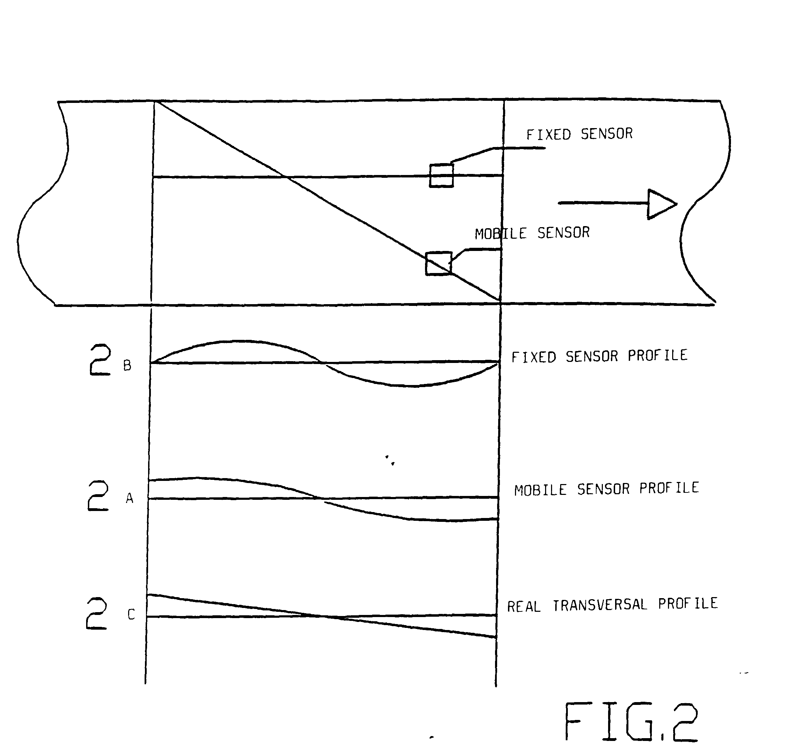

To obtain an immediate visual knowledge of the progress of the variations in the thickness of the film, the measurements which are taken can be graphically represented on a monitor in the form of profiles of the type shown in the boxes in figure 2.

A detector which moves at right angles to the direction of advance of the film reads the thickness according to an inclined direction, for example according to "a" in figure 2, a direction which is a function of the speed of advance of the film and the translation speed of the sensor.

It is obvious that this reading is influenced by the variations in the longitudinal thickness, for which the operator will see a profile like the one shown in figure 2a, in which the variations in thickness in the transversal direction are influenced by those in the orthogonal direction and the resulting profile is difficult to interpret even for an expert.

One characteristic of the method according to the invention is that scanning is effected by a sensor which moves in a transversal direction and, simultaneously, a second sensor scans in a longitudinal direction, maintained in a blocked position.

Subtracting instant by istant the thickness values detected by the fixed sensor from those detected by the mobile sensor, a sufficiently approximate reading of the variations in thickness in the transversal direction is obtained. Then, assuring that the magnitude of the variations in thickness in the longitudinal direction is constant for the whole width of the film, the profile obtained reproduces exactly the curve of the variations in thickness in the transversal direction.

To obtain the profile of the real thickness, the profile obtained in this way is added to the average value of the measurements effected by the fixed sensor during an entire scanning of the mobile sensor.

In essence, the transversal profile of the material is obtained from the combination of a measurement by means of a sensor which moves in a direction at right angles to the direction of advance of the film and the measurement effected by a second sensor maintained in a fixed position, which detects the variations in thickness in a longitudinal direction.

Thus, (figure 2), subtracting profile 2b from profile 2a corresponding to the reading along line "a" and adding the average value of the profile 2b, one obtains the profile 2c which represents the real profile of the variations in thickness in a transversal direction.

As an additional advantage, the various profiles will be displayed simultaneously in different colours. For example, the profile relating to a measurement along line "a" can be displayed on the monitor together with the profile measured in a longitudinal direction for a length equal to the section covered by the film in the period of time which the head which effects the transversal detection takes to cover the whole width of the film.

In this way, the operator has a simple and immediate visual display of the curve of the variation in the thickness of the material without the need for recourse to complicate algorithms or three-dimensional representations which are extremely laborious and practically impossible to read on a monitor of ordinary dimensions. With the equipment according to the invention, the scanning heads can be calibrated with precision, by aligning the heads and reading the thicknesses along the same line of direction as a function of the speed of advance of the film, naturally taking into account the time difference in reading of one head compared to the other.

In this way one is certain of eliminating any imperfection of calibration of one head with respect to the other, since both are calibrated reading the thickness along the same path.

An expert in the sector could then provide numerous modifications and variants, all of which however falling within the scope of this invention as determined by the claims.

## Claims

1. Method for the measurement and display of the thickness and/or weight per area of a film (1) which advances along a longitudinal direction (F) with respect to a measurement apparatus comprising two scanning heads (4), weherein the scanning of the film is effected by a first scanning head (4) which moves in reciprocating motion in a transversal direction at right angles to the direction of advancement of the film and scanning is effected simultaneously in the longitudinal direction of advancement (F) of the film by a second scanning head (4) which remains fixed during the scanning operation, characterised by the fact that the measurement of the thickness effected by the fixed scanning head (4) is subtracted from that effected by the mobile scanning head (4), the result of the readings being displayed in the form of a pair of profiles, one relating to the longitudinal reading, the other relating to the transversal reading, the latter being obtained by the combination of the measurements of said first and second scanning heads (4).

2. Method according to claim 1, in which said second scanning head (4) which carries out the scanning in the longitudinal direction (F) remains immobile for a period of time equal to or a multiple of the time necessary for said first scanning head to effect the reading of the whole width of the film (1), after which the said second scanning head moves to effect a second reading in a different position.

3. Method according to any of the preceding claims, in which the scanning heads (4) are calibrated by aligning the heads and reading the widths along the same line of direction, taking into account the time difference in reading of one head compared to the other as a function of the spees of advance of the film.

4. Scanning apparatus for the measurement and visual display of the thickness of a film (1) as it advances, characterised in that it comprises a pair of scanning heads (4), each consisting of an emitter (5) located on one side of a space for receiving the film and of a corresponding detector (6) located on the opposite side for reading the thickness of the film (1), each of said heads (4) being mobile independently from each other along a fixed support (3) arranged transversally with respect to the longitudinal advancement direction (F) of said film, means being provided for blocking one of the two scanning heads (4) in a fixed position with respect to said support (3), and effecting a reading movement of the other scanning head (4) along said support (3) over the whole width of the film, means being also provided for subtracting the measurement of the thickness effected by one of said scanning heads from that effected by the other scanning head and for displaying the result of the reading in the form of a pair of profiles, one relating to the longitudinal reading, the other relating to the transversal reading, the latter being obtained by the combination of the measurements of said first and second scanning heads (4).

5. Scanning apparatus according to claim 4, characterised by means for displaying on a monitor the readings effected by the said scanning heads (4) in the form of superimposed profiles of different colours.

## Patentansprüche

1. Verfahren zum Messen und Anzeigen der Dicke und/oder des Gewichts pro Flächeneinheit eines Films (1), der sich entlang einer Längsrichtung (F) bezüglich einer Meßvorrichtung fortbewegt, welche zwei Abtastköpfe (4) aufweist, wobei die Abtastung des Films mittels eines ersten Abtastkopfs (4) durchgeführt wird, der sich mit einer Hin- und Herbewegung in einer Querrichtung rechtwinklig zu der Fortbewegungsrichtung des Films bewegt, und wobei die Abtastung gleichzeitig in der Längsrichtung der Fortbewegung (F) des Films mittels eines zweiten Abtastkopfs (4) durchgeführt wird, der während des Abtastvorgangs feststehend bleibt, dadurch gekennzeichnet, daß die mittels des feststehenden Abtastkopfs (4) durchgeführte Messung der Dicke von der mittels des beweglichen Abtastkopfs (4) durchgeführten abgezogen wird, wobei das Ergebnis der Ablesewerte in Form eines Paares von Profilen angezeigt wird, wobei sich eines auf den Ablesewert in der Längsrichtung und das andere auf den Ablesewert in der Querrichtung bezieht, wobei letzteres durch die Kombination der Messungen des ersten und des zweiten Abtastkopfs (4) gewonnen wird.

2. Verfahren nach Anspruch 1, dadurch gekennzeichnet, daß der zweite Abtastkopf (4), der die Abtastung in der Längsrichtung (F) durchführt, für eine Zeitdauer unbeweglich bleibt, die gleich oder ein Vielfaches der Zeit ist, die der erste Abtastkopf benötigt, um das Ablesen der gesamten Breite des Films (1) durchzuführen, woraufhin der zweite Abtastkopf sich bewegt, um ein zweites Ablesen in einer unterschiedlichen Stellung durchzuführen.

3. Verfahren nach einem der vorhergehenden Ansprüche, dadurch gekennzeichnet, daß die Abtastköpfe (4) kalibriert werden, indem man die Köpfe ausrichtet und die Breiten entlang derselben Richtungslinie abliest, wobei man die Zeitdifferenz beim Ablesen eines Kopfes verglichen mit dem anderen als eine Funktion der Fortbewegungsgeschwindigkeit des Films berücksichtigt.

4. Abtastvorrichtung zum Messen und visuellen Anzeigen der Dicke eines Films (1) während er sich fortbewegt, dadurch gekennzeichnet, daß sie ein Paar Abtastköpfe (4) aufweist, die jeweils aus einem auf einer Seite eines Raums zur Aufnahme des Films angeordneten Sender (5) und aus einem auf der gegenüberliegenden Seite angeordneten Detektor (6) bestehen, um die Dicke des Films (1) abzulesen, wobei jeder der Köpfe (4) unabhängig zueinander entlang einer feststehenden Unterlage (3) beweglich ist, die in der Querrichtung bezüglich der Längsrichtung der Fortbewegung (F) des Films angeordnet ist, wobei eine Einrichtung zum Blockieren eines der beiden Abtastköpfe (4) in einer feststehenden Stellung bezüglich der Unterlage (3) vorgesehen ist und eine Ablesebewegung des anderen Abtastkopfes (4) entlang der Unterlage (3) über die gesamte Breite des Films hinweg durchführt, wobei auch eine Einrichtung bereitgestellt wird, um die mittels eines der Abtastköpfe durchgeführte Messung der Dicke von der mittels des anderen Abtastkopfs durchgeführten abzuziehen und um das Ergebnis der Ablesewerte in Form eines Paares von Profilen anzuzeigen, wobei sich eines auf den Ablesewert in der Längsrichtung und das andere auf den Ablesewert in der Querrichtung bezieht, wobei letzteres durch die Kombination der Messungen des ersten und des zweiten Abtastkopfs (4) gewonnen wird.

5. Abtastvorrichtung nach Anspruch 4, gekennzeichnet durch eine Einrichtung, um die mittels der Abtastköpfe (4) durchgeführten Messungen in Form überlagerter Profile unterschiedlicher Farben auf einem Monitor anzuzeigen.

## Revendications

1. Procédé pour mesurer et afficher l'épaisseur et/ou le poids par superficie d'un film (1) qui avance le long d'une direction (F) longitudinale par rapport à un appareil de mesure comprenant deux têtes (4) de balayage, suivant lequel le balayage du film est effectué par une première tête (4) de balayage qui se déplace selon un mouvement de va-et-vient dans une direction transversale à angles droits par rapport à la direction de défilement du film et le balayage est effectué simultanément dans la direction longitudinale de défilement (F) du film par une deuxième tête (4) de balayage qui reste fixe pendant l'opération de balayage, caractérisé en ce que la mesure de l'épaisseur effectuée par la tête (4) de balayage fixe est soustraite de celle effectuée par la tête (4) de balayage mobile, le résultat étant affiché sous la forme d'une paire de profils, l'un se rapportant à la lecture longitudinale, l'autre se rapportant à la lecture transversale, cette dernière étant obtenue par la combinaison des mesures effectuées par lesdites première et deuxième têtes (4) de balayage.

2. Procédé selon la revendication 1, dans lequel ladite deuxième tête (4) de balayage qui effectue le balayage dans la direction (F) longitudinale reste immobile pendant une période de temps égal au temps ou à un multiple du temps nécessaire à ladite première tête de balayage pour effectuer la lecture de toute la largeur du film (1), après quoi ladite deuxième tête de balayage se déplace pour effectuer une deuxième lecture dans une position différente.

3. Procédé selon l'une quelconque des revendications précédentes, dans laquelle les têtes (4) de balayage sont calibrées en alignant les têtes et en lisant les largeurs le long de la même ligne de direction, en tenant compte de la différence de temps de lecture d'une tête par rapport à l'autre comme d'une fonction des vitesses de progression du film.

4. Appareil de balayage pour mesurer et afficher visuellement l'épaisseur d'un film (1) à mesure qu'il progresse, caractérisé en ce qu'il comprend une paire de têtes (4) de balayage, chacune consistant en un émetteur (5) situé sur un côté d'un espace destiné à recevoir le film et d'un détecteur (6) correspondant situé sur le côté opposé pour lire l'épaisseur du film (1), chacune desdites têtes (4) étant mobile indépendamment l'une de l'autre le long d'un support (3) fixe disposé transversalement par rapport à la direction (F) longitudinale de défilement dudit film, des moyens étant prévus pour bloquer une des deux têtes (4) de balayage dans une position fixe par rapport audit support (3) et faisant effectuer un mouvement de lecture à la deuxième tête de balayage le long dudit support (3) sur toute la largeur du film, des moyens étant prévus pour soustraire la mesure de l'épaisseur effectuée par une desdites têtes de balayage de celle effectuée par l'autre tête de balayage et pour afficher le résultat de la lecture sous la forme d'une paire de profils, l'un se rapportant à la lecture longitudinale, l'autre se rapportant à la lecture transversale, cette dernière étant obtenue par la combinaison des mesures effectuées par lesdites première et deuxième têtes (4) de balayage.

5. Appareil de balayage selon la revendication 4, caractérisé par des moyens destinés à afficher sur un moniteur les lectures effectuées par ledites têtes (4) de balayage sous la forme de profils superposés de différentes couleurs.
